# EUROPÄISCHE PATENTSCHRIFT

(11) **EP 0 379 868 B1**
(45) Veröffentlichungstag und Bekanntmachung des Hinweises auf die Patenterteilung: **08.12.1993**
(21) Anmeldenummer: 90100191.7
(22) Anmeldetag: 05.01.1990
(51) Int. Cl.: A01N 25/26

(54) **Flüssige Wirkstoffe enthaltende Trägergranulate**
Carrier granulates containing liquid active agents
Granulés de support contenant des substances actives liquides

(30) Priorität: 18.01.1989 DE 3901273
(43) Veröffentlichungstag der Anmeldung: 01.08.1990
(73) Patentinhaber: BAYER AG, 51368 Leverkusen (DE)
(72) Erfinder: Antfang, Elmar, Dr., D-4019 Monheim (DE); Kerimis, Dimitrios, Dr., D-5000 Köln 71 (DE); Singer, Rolf-Jürgen, Dr., D-5600 Wuppertal 1 (DE)

(56) Entgegenhaltungen:
- EP-A- 0 016 278
- EP-A- 0 192 118
- EP-A- 0 230 601
- US-A- 3 137 618

## Beschreibung

Die vorliegende Erfindung betrifft neue, flüssige Wirkstoffe enthaltende Trägergranulate (sogenannte "Monoträgergranulate") Als Wirkstoff werden erfindungsgemäß vorzugsweise die aktiven Komponenten des Pflanzenschutzgebiets verstanden, wie Insektizide, Nematizide, Akarizide, Fungizide, Herbizide und Wachstumsregulatoren.

Die Erfindung betrifft weiterhin ein Verfahren zur Herstellung der neuen Monoträgergranulate sowie deren Verwendung zur Bekämpfung von Schädlingen, vorzugsweise im Landwirtschafts- und Gartenbereich`

Es sind bereits zahlreiche Trägergranulate bekannt, die feste oder flüssige biozide Wirkstoffe auf einem körnigen Trägermaterial enthalten (vgl. Büchel, "Pflanzenschutz und Schadlingsbekämpfung", Georg-Thieme-Verlag, Stuttgart, 1977, Seiten 198 und 199, EP-A-192 118).

So lassen sich Trägergranulate mit festen Wirkstoffen zum Beispiel dadurch herstellen, daß man die aktiven Komponenten gegebenenfalls im Gemisch mit Zusatzstoffen in feinverteilter Form mit Hilfe von diversen Klebemitteln auf der kompakten bzw. nicht absorptiven Oberfläche des Trägermaterials fixiert. Trägergranulate mit nur flüssigen Wirkstoffen konnten nach dieser Methode nicht mit ausreichender Abriebfestigkeit hergestellt werden.

Trägergranulate, die flüssige biozide Wirkstoffe enthalten, lassen sich zum Beispiel dadurch zubereiten, daß man poröse oder absorptive Trägermaterialien mit flüssigen Wirkstoffen oder mit Lösungen flüssiger Wirkstoffe in geeigneten Solventien, jeweils gegebenenfalls im Gemisch mit Zusatzstoffen, tränkt. Die Eigenschaften dieser Granulate sind aber nicht immer befriedigend. Wegen der geringen Härte der absorptiven Granulate können diese unter Beanspruchung physikalischer Kräfte abreiben und so biozidhaltigen Staub freisetzen.

Es wurden nun neue, flüssige Wirkstoffe enthaltende Trägergranulate gefunden, die
a) körniges Trägermaterial mit nicht-absorptiver Oberfläche,
b) mindestens einen flüssigen Wirkstoff des Pflanzenschutzgebiets im Gemisch mit feinkörnigen anorganischen Feststoffen
c) als Bindemittel mindestens einen Kleber auf Polyurethanbasis, gegebenenfalls im Gemisch mit einem weiteren Kleber auf Basis eines der folgenden Systeme:
   Polyvinylacetat, Polyvinylpyrrolidon, Polyvinylalkohol, Copolymerisate aus Vinylacetat/Maleinsäure-di-n-butylester, Acrylsäureester, Vinylacetat/Ethylen, Vinylacetat/Ethylen/Vinylchlorid, Vinylacetat/Acrylsäureester, Vinylacetat/Vinylester, Styrol/Acrylsäureester sowie
d) gegebenenfalls Zusatzstoffe enthalten.

Weiterhin wurde gefunden, daß sich die Erfindungsgemäßen Monoträgergranulate dadurch herstellen lassen, daß man
- körniges Trägermaterial mit nicht-absorptiver Oberfläche in einem Mischer mit einer wäßrigen Dispersion eines Polyurethan-Klebers, gegebenenfalls unter Zusatz eines Verdickungsmittels und gegebenenfalls im Gemisch mit einer wäßrigen Dispersion eines weiteren Klebers auf Basis einer der folgenden Systeme:
   Polyvinylacetat, Polyvinylpyrrolidon, Polyvinylalkohol, Copolymerisate aus Vinylacetat/Maleinsäure-di-n-butylester, Acrylsäureester, Vinylacetat/Ethylen, Vinylacetat/Ethylen/Vinylchlorid, Vinylacetat/Acrylsäureester, Vinylacetat/Vinylester, Styrol/Acrylsäureester besprüht, dann mit einer die flüssigen Wirkstoffe und Streckmittel enthaltenden Mischung versetzt, gegebenenfalls nochmals mit einer wäßrigen Dispersion eines weiteren Klebers auf Basis der oben genannten Systeme besprüht und die so erhaltenen körnigen Produkte trocknet.

Schließlich wurde gefunden, daß sich die erfindungsgemäßen Monoträgergranulate je nach den enthaltenen Wirkstoffen für verschiedenste Zwecke in der Landwirtschaft und im Gartenbau verwenden lassen.

Es ist als äußerst überraschend zu bezeichnen, daß die erfindungsgemäßen Monoträgergranulate eine bessere Wirksamkeit zeigen als vorbekannte Granulate, bei denen flüssige Wirkstoffe in Form einer Lösung auf poröse oder absorptive Trägermaterialien aufgezogen sind. Weiter ist es von Vorteil, daß die als Klebemittel verwendeten Polyurethanverbindungen unter Umweltbedingungen leicht abgebaut werden und den Wirkstoff freigeben, wobei sie den Wirkstoff bis zur Freisetzung vor chemischen Einflüssen schützen.

Die erfindungsgemäßen Monoträgergranulate zeichnen sich durch eine Reihe von Vorteilen aus. So wird für das Monoträgergranulat die Ausbringung in den für die Applikation mit Trägergranulaten auf nicht absorptivem Trägermaterial eingestellten Geräten ohne aufwendige Neujustierung möglich.

Ferner werden die in diesen Granulaten enthaltenen Wirkstoffe (aktive Komponenten) in der jeweils gewünschten Weise an ihrem Einsatzort freigesetzt. Darüberhinaus handelt es sich bei den erfindungsgemäßen Monoträgergranulaten um Produkte, die sich durch eine extrem hohe Abriebfestigkeit auszeichnen.

Die erfindungsgemäßen Produkte werden im vorliegenden Fall als Monoträgergranulate bezeichnet, wobei das Monoträgergranulat mindestens einen flüssigen bioziden Wirkstoff, der auch in Form von Mikrokapseln voliegen kann, enthält.

Als körnige Trägermaterialien mit nicht absorptiver Oberfläche können in den erfindungsgemäßen Monoträgergranulaten alle üblichen, in derartigen Granulaten enthaltenen Trägerstoffe mit nicht absorptiver Oberfläche eingesetzt werden. Vorzugsweise in Betracht kommen Calcit, Dolomit und Sand, wie z.B. Quarzsand.

Der mittlere Teilchendurchmesser der Trägermaterialien kann innerhalb eines bestimmten Bereiches variiert werden. Im allgemeinen liegt der mittlere Teilchendurchmesser zwischen 0,1 und 3,0 mm, vorzugsweise zwischen 0,3 und 1 mm.

Unter aktiven Wirkstoffkomponenten sind, wie bereits oben erwähnt, im vorliegenden Fall alle üblicherweise im Pflanzenschutz verwendbaren Wirkstoffe zu verstehen. Hierzu gehören vorzugsweise Insektizide, Nematizide, Akarizide, Fungizide, Herbizide und Wachstumsregulatoren.

Die erfindungsgemäßen Granulate enthalten für das Monoträgergranulat mindestens einen bei Raumtemperatur flüssigen Wirkstoff. Als bei Raumtemperatur flüssige Wirkstoffe kommen vorzugsweise Phosphorsäure-Derivate in Betracht. Beispielhaft seien genannt:
0-Ethyl-0-(2-isopropyloxycarbonyl-phenyl)-W-isopropylthionophosphorsäureesteramid,
0,0-Diethyl-α-cyanobenzylidenamino-oxyphosphonothioate,
0,0-Dimethyl-0-(4-methylmercapto-3-methyl-phenyl)-thionophosphorsäureester,
0-Ethyl-0-(4-methylthio-phenyl)-S-propyl-dithiophosphat,
(0,0-Diethyl-thionophosphoryl)-α-oximinophenylessigsäurenitril,
0,0-Diethyl-0-(3-chlor-4-methyl-7-cumarinyl)-thiophosphat,
S-[1,2-Bis-(ethoxycarbonyl)-ethyl]-0,0-dimethyl-dithiophosphorsäureester.

Als Bindemittel fungiert in den erfindungsgemäßen Monoträgergranulaten ein Kleber auf Polyurethanbasis, gegebenenfalls im Gemisch mit einem weiteren Kleber auf Basis einer der folgenden Systeme: Polyvinylacetat, Polyvinylpyrrolidon, Polyvinylalkohol sowie mit Copolymerisaten aus Vinylacetat/Maleinsäure-di-n-butylester, Acrylsäureester, Vinylacetat/Ethylen, Vinylacetat/Ethylen/Vinylchlorid, Vinylacetat/Acrylsäureester, Vinylacetat/Vinylester, Styrol/Acrylsäureester.

Als Zusatzstoffe, die in den erfindungsgemäßen Mono-Trägergranulaten vorhanden sein können, kommen Streckmittel, Farbstoffe sowie Wasser und organische Solventien in Frage.

Hierbei kommen als Streckmittel vorzugsweise feinkörnige anorganische Feststoffe in Frage, wie natürliche Gesteinsmehle, z.B. Kaolin, Tonerden, Talkum, Kreide, Quarzpulver, Attapulgit, Montmorillonit, Sepiolith, Zeolith, Bentonit, ferner synthetische Gesteinsmehle wie hochdisperse Kieselsäuren.

Als Farbstoffe, die als Zusatzstoffe in Betracht kommen, seien anorganische Pigmente wie Eisenoxid, Titandioxid, Ferrocyanoblau und organische Farbstoffe wie Anthrachinon-, Azo- und Metallphthalocyaninfarbstoffe genannt.

Als organische Solventien kommen alle üblicherweise für die Herstellung von Trägergranulaten verwendbaren organischen Solventien in Frage. Vorzugsweise in Betracht kommen niedrig siedende organische Solventien wie Methanol, Ethanol, Butanol und Methylenchlorid.

Die erfindungsgemäßen Granulate bestehen aus körnigen Trägermaterialien, auf deren nicht absorptiver Oberfläche sich eine umhüllende Schicht befindet, die für Monoträgergranulate mindestens einen flüssigen Wirkstoff enthält. Als Bindemittel wirkt Polyurethan und Gemische aus Polyurethan und Polyvinylacetat, Polyvinylpyrollidon, Polyvinylalkohol, sowie Mischungen mit Copolymerisaten aus Vinylacetat/Maleinsäure-di-n-butylester, Acrylsäureester, Vinylacetat/Ethylen, Vinylacetat/Ethylen/Vinylchlorid, Vinylacetat/Acrylsäureester, Vinylacetat/Vinylester, Styrol/Acrylsäureester, die gegebenenfalls Zusatzstoffe enthalten können. Die in der umhüllenden Schicht vorhandenen Komponenten können zum Teil auch in Einbuchtungen im Trägermaterial eindringen.

In den erfindungsgemäßen Monoträgergranulaten können die prozentualen Anteile der enthaltenen Komponenten innerhalb größerer Bereiche variiert werden. Der Anteil an körnigem Trägermaterial liegt im allgemeinen zwischen 50 und 99,5 Gew.-%, vorzugsweise zwischen 60 und 92 Gew.-%. Der Anteil an flüssigen Wirkstoffen beträgt im allgemeinen zwischen 0,1 und 20 Gew.-%, vorzugsweise zwischen 0,5 und 15 Gew.-%.

Der Anteil an dem als Bindemittel fungierendem Polyurethan und Gemische aus Polyurethan und Polyvinylacetat, Polyvinylpyrrolidon, Polyvinylalkohol, sowie Mischungen mit Copolymerisaten aus Vinylacetat/Maleinsäure-di-n-butylester, Acrylsäureester, Vinylacetat/Ethylen, Vinylacetat/Ethylen/Vinylchlorid, Vinylacetat/Acrylsäureester, Vinylacetat/Vinylester, Styrol/Acrylsäureester, liegt im allgemeinen zwischen 0,1 und 4 Gew.-%, vorzugsweise zwischen 0,3 und 3 Gew.-%, wobei auf 1 Teil Polyurethan im allgemeinen 0,05 bis 0,49 Gewichtsteile, vorzugsweise 0,1 bis 0,2 Gewichtsteile an Polyvinylacetat, Polyvinylpyrrolidon, Polyvinylalkohol sowie Anteile der oben aufgeführten Copolymerisate entfallen. Zusatzstoffe sind gegebenenfalls in Anteilen von 1 bis 40 Gewichtsteilen, vorzugsweise von 2 bis 30 Gewichtsteilen, enthalten.

Bei der Herstellung der erfindungsgemäßen Monoträgergranulate werden vorzugsweise alle diejenigen Komponenten verwendet, die bereits im Zusammenhang mit der Beschreibung der Erfindungsgemäßen Monoträgergranulate vorzugsweise genannt wurden.

Das als Bindemittel fungierende Polyurethan oder das Gemisch aus Polyurethan und denjenigen Komponenten, die bereits im Zusammenhang mit der Beschreibung der erfindungsgemäßen Monoträgergranulate vorzugsweise genannt werden, wird, wie bereits oben angegeben, als wäßrige Dispersion eingesetzt. Als Verdünnungsmittel kommen hierbei neben Wasser auch organische Substanzen in Frage, vorzugsweise niedrig siedende organische Lösungsmittel, wie Methanol, Ethanol, Butanol und 1,2-Dichlormethan.

Bei der Durchführung des erfindungsgemäßen Verfahrens geht man im allgemeinen so vor, daß man
- körniges Trägermaterial mit nicht absorptiver Oberfläche in einen Mischer gibt und unter ständigem Mischen mit einer wäßrigen Dispersion aus Polyurethan oder einem Gemisch aus Polyurethan und denjenigen Komponenten, die bereits im Zusammenhang mit der Beschreibung der Erfindungsgemäßen Monoträgergranulate genannt wurden, besprüht,
- dann mit mindestens einem flüssigen Wirkstoff, gegebenenfalls im Gemisch mit Streckmitteln versetzt,
- gegebenenfalls erneut mit einer wäßrigen Dispersion aus Polyurethan oder einem Gemisch aus Polyurethan und denjenigen Komponenten, die bereits im Zusammenhang mit der Beschreibung der Erfindungsgemäßen Monoträgergranulate vorzugsweise genannt wurden, besprüht und
- die so erhaltenen körnigen Produkte trocknet.

Die Reihenfolge, in der die Komponenten auf das Trägermaterial aufgebracht werden, kann in der jeweils gewünschten Weise variiert werden.

Das erfindungsgemäße Verfahren wird im allgemeinen bei Raumtemperatur durchgeführt. Es ist jedoch auch möglich, auch bei etwas erhöhter Temperatur zu arbeiten.

Die Trocknungstemperatur kann innerhalb eines größeren Bereichs variiert werden. Im allgemeinen trocknet man bei Granulat-Temperaturen zwischen 20°C und 70°C, vorzugsweise zwischen 30°C und 65°C. Die Trocknung kann gegebenenfalls unter vermindertem Druck vorgenommen werden. Ferner kann die Trocknung entweder in dem zur Beschichtung des Trägermaterials dienenden Mischer oder aber in einer separaten Trocknungsapparatur erfolgen.

Das erfindungsgemäße Verfahren kann entweder diskontinuierlich oder kontinuierlich in üblichen Apparaturen durchgeführt werden.

Die erfindungsgemäßen Monoträgergranulate lassen sich je nach den enthaltenen aktiven Komponenten für die verschiedensten Zwecke einsetzen. So lassen sie sich z.B. zur Bekämpfung von tierischen Schädlingen, Pilzen und/oder Unkraut verwenden. Sind Pflanzenwachstumsregulatoren enthalten, so können sie auch zur Beeinflussung des Wachstum von Kulturpflanzen eingesetzt werden.

Als Kleber auf Polyurethanbasis kommen solche Systeme in Betracht, bei denen die eigentliche Polyurethanverbindung durch Polyaddition eines teilveresterten Glykols, symmetrischen oder unsymmetrischen Polyglykols mit Isocyanat-, Diisocyanat- oder Polyisocyanatüberschuß gebildet wird, wobei freie Isocyanatgruppen als Präpolymere erhalten bleiben.

Vorzugsweise werden Polyurethane eingesetzt, die hergestellt werden aus einem gesättigten Polyester, gebildet aus Adipinsäure und n-Butandiol-n-hexandiol, durch Umsetzung mit lineraren Iso- oder Diisocyanaten, wobei freie Isocyanatgruppen erhalten bleiben.

Durch Umsetzung der dabei entstehenden Präpolymere mit Mischungen aus Wasser und Emulgatoren kommt es zur Kettenverlängerung und Bildung einer wäßrigen Dispersion.

### Herstellungsbeispiel

In einem Mischer werden 51,37 kg Quarzsandkörner mit einem Durchmesser von 0,4 bis 0,8 mm unter ständigem Mischen bei Raumtemperatur (20°C) mit 0,192 kg einer wäßrigen Dispersion besprüht, die 0,077 kg Polyurethan (hergestellt aus Adipinsäure und n-Butandiol-n-hexandiol und Umsetzung mit Isocyanat sowei weitere Umsetzung der dabei entstandenen Präpolymeren mit Mischungen aus Wasser und Emulgatoren) enthält.

Danach werden bei Raumtemperatur 1,155 kg einer fein gemahlenen pulvrigen Mischung, die 0,577 kg der insektiziden Verbindung der Formel 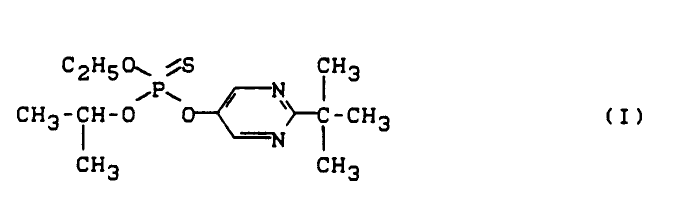
und 0,578 kg hochdisperse Kieselsäure enthält, zugegeben.

Nun werden die mit der pulvrigen Mischung beschichteten Quarzsandkörner mit einer wäßrigen Dispersion besprüht, die 0,22 kg Polyurethankleber obiger Zusammensetzung enthält und weitere 1,155 kg der oben charakterisierten, fein gemahlenen pulvrigen Mischung, die 0,577 kg des Wirkstoffs (I) enthält sowie 0,385 kg blauer Farbstoff unter Mischen zugegeben.

Man mischt weitere 10 Minuten bei Raumtemperatur und trocknet dann im Mischer bei einer Trockentemperatur von höchstens 60°C.

Man erhält so 55,0 kg Monoträgergranulat mit einem Gehalt von 2,1 Gew.-% Wirkstoff der Formel (I).

Das Granulat zeichnet sich durch eine hohe Abriebfestigkeit aus.

### Vergleichsbeispiel

### Monoträgergranulat auf Basis Polyvinylacetet-Kleber

In einem Mischer werden 93,4 g Quarzsandkörner mit einem Durchmesser von 0,4 bis 0,8 mm unter ständigem Mischen bei Raumtemperatur mit einer wäßrigen Dispersion besprüht, die 0,69 g Polyvinylacetat enthält. Danach werden bei Raumtemperatur 2,10 g einer handelsüblichen, fein gemahlenen pulvrigen mischung, die 1,05 g der Verbindung der Formel (I) 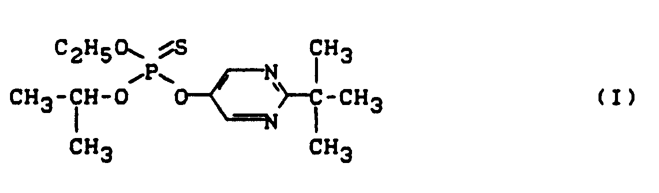
enthält, zugegeben.

Nun werden die mit der pulvrigen Mischung beschichteten Quarzsandkörner mit einer wäßrigen Dispersion besprüht, die 0,69 g Polyvinylacetat enthält und 2,1 g der fein gemahlenen pulvrigen Mischung, die 1,05 g des Wirkstoffs (I) enthält, sowie 0,7 % blauer Farbstoff unter Mischen zugegeben.

Man mischt weitere 10 Minuten bei Raumtemperatur und trocknet dann im Mischer bei einer Trockentemperatur von höchstens 60°C.

Man erhält so 100 g Monoträgergranulat mit einem Gehalt von 2,1 Gew.-% Wirkstoff der Formel (I).

Das erhaltene Granulat zeigte einen starken Abrieb und Erweichung, so daß es für eine praktische Verwendung nicht geeignet war.

## Patentansprüche

1. Flüssige Wirkstoffe enthaltende Trägergranulate, die
a) körniges Trägermaterial mit nicht-absorptiver Oberfläche,
b) mindestens einen flüssigen Wirkstoff des Pflanzenschutzgebiets im Gemisch mit feinkörnigen anorganischen Feststoffen,
c) als Bindemittel mindestens einen Kleber auf Polyurethanbasis, gegebenenfalls im Gemisch mit einem weiteren Kleber auf Basis eines der folgenden Systeme:
Polyvinylacetat, Polyvinylpyrrolidon, Polyvinylalkohol, Copolymerisate aus Vinylacetat/Maleinsäure-di-n-butylester, Acrylsäureester, Vinylacetat/Ethylen, Vinylacetat/Ethylen/Vinylchlorid, Vinylacetat/Acrylsäureester, Vinylacetat/Vinylester, Styrol/Acrylsäureester sowie
d) gegebenenfalls Zusatzstoffe enthalten.

2. Trägergranulate gemäß Anspruch 1, dadurch gekennzeichnet, daß sie als Wirkstoff einen flüssigen Phosphorsäureester enthalten.

3. Trägergranulate gemäß Anspruch 1 oder 2, dadurch gekennzeichnet, daß sie als Zusatzstoffe Farbstoffe, Wasser, organische Solventien enthalten.

4. Trägergranulate gemäß Anspruch 3, dadurch gekennzeichnet, daß sie als Farbstoffe anorganische Pigmente enthalten.

5. Trägergranulate gemäß Anspruch 3, dadurch gekennzeichnet, daß sie als organische Solventien Methanol, Ethanol, Butanol oder Methylenchlorid enthalten.

6. Verfahren zur Herstellung von flüssigen Wirkstoffen enthaltenden Trägergranulaten gemäß Anspruch 1, dadurch gekennzeichnet, daß man
- körniges Trägermaterial mit nicht-absorptiver Oberfläche in einem Mischer mit einer wäßrigen Dispersion eines Polyurethan-Klebers, gegebenenfalls unter Zusatz eines Verdickungsmittels und gegebenenfalls im Gemisch mit einer wäßrigen Dispersion eines weiteren Klebers auf Basis einer der folgenden Systeme:
Polyvinylacetat, Polyvinylpyrrolidon, Polyvinylalkohol, Copolymerisate aus Vinylacetat/Maleinsäure-di-n-butylester, Acrylsäureester, Vinylacetat/Ethylen, Vinylacetat/Ethylen/Vinylchlorid, Vinylacetat/Acrylsäureester, Vinylacetat/Vinylester, Styrol/Acrylsäureester
besprüht, dann mit einer die flüssigen Wirkstoffe und Streckmittel enthaltenden Mischung versetzt, gegebenenfalls nochmals mit einer wäßrigen Dispersion eines weiteren Klebers auf Basis der oben genannten Systeme besprüht und die so erhaltenen körnigen Produkte trocknet.

7. Verwendung der flüssigen Wirkstoffe enthaltenden Trägergranulate gemäß Anspruch 1 bis 6 zur Bekämpfung von Schädlingen vorzugsweise im Landwirtschafts- und Gartenbereich.

## Claims

1. Carrier granules containing liquid active compounds, which contain
a) granular carrier material having a non-absorptive surface,
b) at least one liquid active compound from the plant protection area mixed with fine-grain inorganic solids,
c) at least one adhesive based on polyurethane as a binder, optionally mixed with a further adhesive based on one of the following systems: polyvinyl acetate, polyvinylpyrrolidone, polyvinyl alcohol, copolymers of vinyl acetate/di-n-butyl maleate, acrylic acid esters, vinyl acetate/ethylene, vinyl acetate/ethylene/vinyl chloride, vinyl acetate/acrylic acid esters, vinyl acetate/vinyl esters, styrene/acrylic acid esters and
d) optionally additives.

2. Carrier granules according to Claim 1, characterized in that they contain a liquid phosphoric acid ester as the active compound.

3. Carrier granules according to Claim 1 or 2, characterized in that they contain colorants, water or organic solvents as additives.

4. Carrier granules according to Claim 3, characterized in that they contain inorganic pigments as colorants.

5. Carrier granules according to Claim 3, characterized in that they contain methanol, ethanol, butanol or methylene chloride as organic solvents.

6. Process for the preparation of carrier granules containing liquid active compounds according to Claim 1, characterized in that
- granular carrier material having a non-absorptive surface is sprayed into a mixer with an aqueous dispersion of a polyurethane adhesive, optionally with the addition of a thickener and optionally mixed with an aqueous dispersion of a further adhesive based on one of the following systems:
polyvinyl acetate, polyvinylpyrrolidone, polyvinyl alcohol, copolymers of vinyl acetate/di-n-butyl maleate, acrylic acid esters, vinyl acetate/ethylene, vinyl acetate/ethylene/vinyl chloride, vinyl acetate/acrylic acid esters, vinyl acetate/vinyl esters, styrene/acrylic acid esters,
then a mixture containing the liquid active compounds and extenders is added, the product is optionally sprayed again with an aqueous dispersion of a further adhesive based on the abovementioned systems and the granular products thus obtained are dried.

7. Use of the carrier granules containing liquid active compounds according to Claim 1 to 6 for combating pests, preferably in the agricultural and horticultural field.

## Revendications

1. Granulés-véhicules contenant des substances actives liquides, qui contiennent :
a) une matière-véhicule granuleuse à surface non absorbante,
b) au moins une substance active liquide du domaine de la protection des végétaux en mélange avec des substances solides minérales en grains fins,
c) en tant que liant, au moins une colle à base de polyuréthanne, éventuellement en mélange avec une autre colle à base de l'un des constituants suivants :
l'acétate de polyvinyle, la polyvinylpyrrolidone, l'alcool polyvinylique, les copolymères acétate de vinyle/maléate de di-n-butyle, d'esters acryliques, acétate de vinyle/éthylène, acétate de vinyle/éthylène/chlorure de vinyle, acétate de vinyle/ester acrylique, acétate de vinyle/ester vinylique, styrène/ester acrylique et
d) le cas échéant des additifs.

2. Granulés-véhicules selon la revendication 1, caractérisés en ce qu'ils contiennent en tant que substance active un ester phosphorique liquide.

3. Granulés-véhicules selon la revendication 1 ou 2, caractérisés en ce qu'ils contiennent en tant qu'additifs des colorants, de l'eau, des solvants organiques.

4. Granulés-véhicules selon la revendication 3, caractérisés en ce qu'ils contiennent en tant que colorants des pigments minéraux.

5. Granulés-véhicules selon la revendication 3, caractérisés en ce qu'ils contiennent en tant que solvant organique du méthanol, de l'éthanol, du butanol ou du chlorure de méthylène.

6. Procédé de préparation des granulés-véhiculés contenant des substances actives liquides selon la revendication 1, caractérisé en ce que, dans un mélangeur contenant la matière-véhicule granuleuse à surface non absorbante, on applique par pulvérisation une dispersion aqueuse d'une colle de polyuréthanne, éventuellement avec adjonction d'un agent épaississant et le cas échéant en mélange avec une dispersion aqueuse d'une autre colle à base de l'un des constituants suivants : l'acétate de polyvinyle, la polyvinylpyrrolidone, l'alcool polyvinylique, les copolymères acétate de vinyle/maléate de di-n-butyle, d'esters acryliques, acétate de vinyle/éthylène, acétate de vinyle/éthylène/chlorure de vinyle, acétate de vinyle/ester acrylique, acétate de vinyle/ester vinylique, styrène/ester acrylique, puis on ajoute un mélange contenant les substances actives liquides et les diluants, le cas échéant on applique encore par pulvérisation une dispersion aqueuse d'une autre colle à base des constituants mentionnés ci-dessus puis on sèche les produits granuleux ainsi obtenus.

7. Utilisation des granulés-véhicules contenant des substances actives liquides selon les revendications 1 à 6 pour la lutte contre les parasites, de préférence dans l'agriculture et l'horticulture.
